# EUROPEAN PATENT SPECIFICATION

(11) **EP 4 496 336 B1**
(45) Date of publication and mention of the grant of the patent: **11.11.2026**
(21) Application number: 24189810.5
(22) Date of filing: 19.07.2024
(51) Int. Cl.: H04N 25/46, H04N 25/713, H04N 25/72

(54) **APPARATUS AND METHOD FOR PIXEL BINNING FOR CHARGE-DOMAIN CMOS TDI IMAGING**
VORRICHTUNG UND VERFAHREN ZUR PIXELBINNING FÜR LADUNGSDOMÄNEN-CMOS-TDI-BILDGEBUNG
APPAREIL ET PROCÉDÉ DE COMPARTIMENTAGE DE PIXELS POUR IMAGERIE TDI À CMOS À DOMAINE DE CHARGE

(30) Priority: 21.07.2023 US 202318356840
(43) Date of publication of application: 22.01.2025
(73) Proprietor: Teledyne Digital Imaging, Inc., Toronto, Ontario M5K 0A1 (CA)
(72) Inventor: Lee, Hyun Jung, Waterloo, Ontario, N2T 2N3 (CA); Donegan, Paul, Kitchener, Ontario, N2P 2V5 (CA)
(74) Representative: Petraz, Gilberto Luigi

(56) References cited:
- EP-B1- 1 955 538
- US-A1- 2017 048 467

## Description

### FIELD

This disclosure relates to the field of pixel binning for charge-domain complementary metal-oxide-semiconductor (CMOS) time delay and integration (TDI) image sensors. Document US2017/048467A1 discloses a dark-field inspection using a low-noise sensor. Document EP1955538B1 discloses an apparatus for continuous clocking of TDI sensors.

### SUMMARY

In part, in one aspect, the disclosure relates to a CMOS TDI image sensor according to claim 1.

### BRIEF DESCRIPTION OF THE FIGURES

Unless specified otherwise, the accompanying drawings illustrate aspects of the innovations described herein. Referring to the drawings, wherein like numerals refer to like parts throughout the several views and this specification, several embodiments of presently disclosed principles are illustrated by way of example, and not by way of limitation. The drawings are not intended to be to scale. A more complete understanding of the disclosure may be realized by reference to the accompanying drawings in which:
Figure 1 is a block diagram of a conventional CMOS TDI image sensor.
Figure 2 is a block diagram of a pixel-binning CMOS TDI image sensor according to an exemplary embodiment of the disclosure.
Figure 3 is a detailed view of the image sensor of Figure 2 according to an exemplary embodiment of the disclosure.
Figures 4A-4I are a detailed operational sequence of the pixel binning apparatus for four times binning according to an exemplary embodiment of the disclosure.
Figure 5 is a timing diagram for the operation of the pixel binning apparatus according to an exemplary embodiment of the disclosure.
Figure 6 is a logic flow diagram of a method of the operation of the pixel binning apparatus according to an exemplary embodiment of the disclosure.

### DETAILED DESCRIPTION

This disclosure is to implement pixel binning in the charge domain for a CMOS TDI image sensor. Pixel binning is a technique to combine charges collected by several adjacent pixels. For some imaging applications, high speed or high sensitivity is achieved by pixel binning at the expense of the spatial resolution of the image sensor.

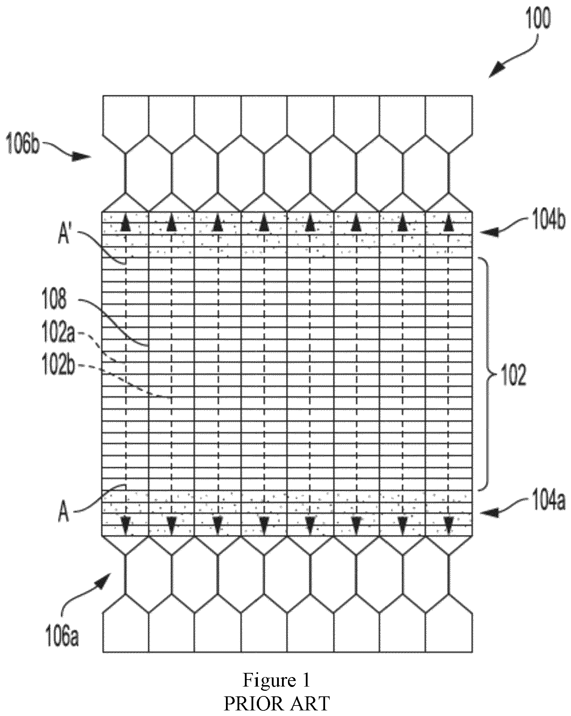

Figure 1 is a block diagram of a conventional CMOS TDI image sensor 100. The conventional CMOS TDI image sensor 100 comprises a plurality of pixel registers 102 arranged in the form of a matrix and a plurality of the corresponding column-parallel circuits 106a and 106b. At each end of the pixel registers is a light-shielded region 104a and 104b, respectively. The pixel registers 102 transfer pixel charge along each column of the matrix either to one TDI scanning direction indicated by arrow A or to the other TDI scanning direction indicated by arrow A' and read out charges either to the corresponding column-parallel circuit 106a or 106b. A channel stop 108 separates charges between neighboring columns 102a and 102b.

This column-based structure makes it impossible to transfer charges across multiple columns over the channel stops 108 for lateral binning in the charge domain (i.e., charge binning in a direction transverse to the longitudinal direction indicated by arrow A or A'). Thus, such binning operation is performed digitally in the conventional CMOS TDI image sensor. However, digital binning is not a noiseless summation and thus it is inferior to charge binning in terms of the signal-to-noise ratio.

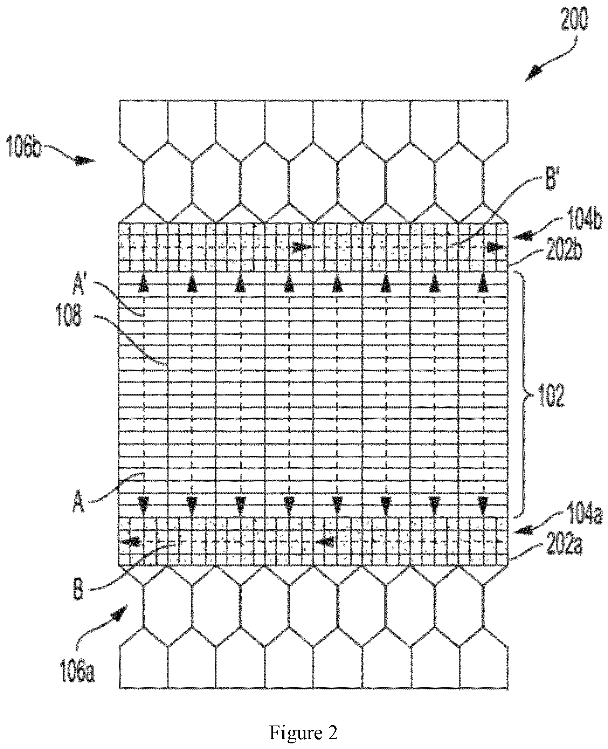

Figure 2 is a CMOS TDI image sensor 200 employing pixel binning in the charge domain according to an exemplary embodiment of the disclosure. The image sensor 200 comprises a first and a second pixel binning apparatus 202a and 202b. The first and the second pixel binning apparatus 202a and 202b are inserted into the first and the second light shielded region 104a and 104b of the image sensor 200, respectively.

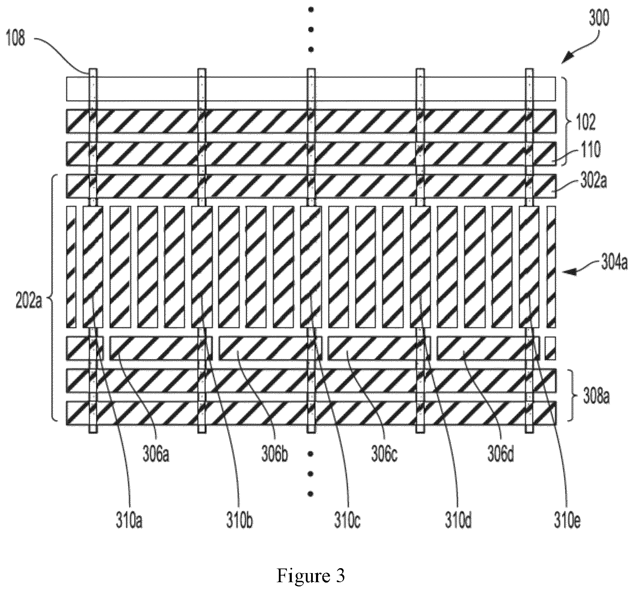

In one general aspect of the present disclosure, the first pixel binning apparatus 202a comprises a first transfer gate 302a disposed along a row and coupled to one end (i.e., row 110) of the plurality of pixel registers 102, a first plurality of binning registers 304a coupled to the first transfer gate 302a, a plurality of second transfer gates 306 coupled to the first plurality of binning registers 304a, and a first row of a plurality of first storage registers 308a coupled to the plurality of second transfer gates 306. These configurations are shown in more detail in Figure 3.

In one general aspect of the present disclosure, the second pixel binning apparatus comprises a third transfer gate disposed along a row and coupled to the other end of the plurality of pixel registers 102, a second plurality of binning registers coupled to the third transfer gate, a plurality of fourth transfer gates coupled to the second plurality of binning registers, and a first row of a plurality of second storage registers coupled to the plurality of fourth transfer gates.

Figure 3 is a detailed view 300 of the image sensor 200 showing the plurality of pixel registers 102 and the first pixel binning apparatus 202a for four times binning operation according to an exemplary embodiment of the disclosure. The first pixel binning apparatus 202a comprises a row of a first transfer gate 302a (TG1) coupled between a first row 110 of the plurality of pixel registers 102 and the four columns of binning registers 304a. A group of second transfer gates 306 (TG2) comprising a first second transfer gate 306a (TG2-1), a second second transfer gate 306b (TG2-2), a third second transfer gate 306c (TG2-3), and a fourth second transfer gate 306d (TG2-4) coupled between the binning registers 304a and a first row of the storage registers 308a. The binning registers 304a oriented orthogonal to the plurality of pixel registers 102 do not have the channel stop 108. This structure enables the binning registers 304a to transfer charge transversely to the pixel registers 102 as indicated by arrows B and B' in Figure 2. In various aspects, the group of second transfer gates 306 can comprise additional or fewer second transfer gates for additional or fewer times binning.

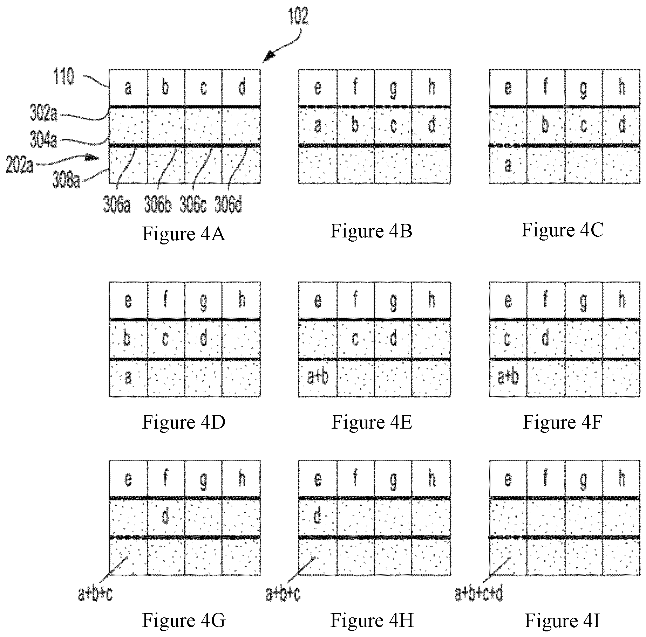

Figures 4A-I illustrate a detailed operational sequence of the pixel binning apparatus for four times binning according to an exemplary embodiment of the disclosure. With reference now to Figure 4A together with Figures 2 and 3, the first pixel binning apparatus 202a comprises the first transfer gate 302a coupled to a first row 110 of the plurality of pixel registers 102, the four columns of the binning registers 304a coupled to the first transfer gate 302a, a group of four second transfer gates 306 coupled to the four columns of the binning registers 304a, and the storage register 308a coupled to the group of four second transfer gates 306.

At the first stage illustrated in Figure 4A, the first row 110 of the plurality of pixel registers 102 stores charge (a, b, c, d) in each of the pixel registers. The first transfer gate 302a is clocked low (denoted by a thick solid line) to store the charges in the pixel registers.

At the second stage illustrated in Figure 4B, the first transfer gate 302a is clocked high (denoted by a thick dashed line) and transfers the charge (a, b, c, d) from each of the pixel registers 102 to the corresponding binning register 304a below. The first row 110 receives the next charge (e, f, g, h) in each pixel. The first transfer gate 302a is clocked low to hold the charge (e, f, g, h) in the first row 110 until the binning operation illustrated from Figures 4C-I is completed.

At the third stage illustrated in Figure 4C, the first second transfer gate 306a is clocked high to transfer the first charge (a) stored in the first binning register above the first second transfer gate 306a to the storage register 308a below the first second transfer gate 306a. The second second transfer gate 306b, the third second transfer gate 306c, and the fourth second transfer gate 306d are clocked low to store the remaining charges (b, c, d) in the rest of the binning registers 304a, respectively.

At the fourth stage illustrated in Figure 4D, the binning registers 304a laterally transfer the remaining charges (b, c, d) stored in the binning registers 304a by a column. The binning registers 304a do not have the channel stop 108 to prevent charges from being transferred. The second charge (b) is now located in the first column of the binning registers 304a.

At the fifth stage illustrated in Figure 4E, the first second transfer gate 306a transfers the second charge (b) to the storage register 308a. The first charge (a) and the second charge (b) are added (a + b) in the storage register 308a. The second second transfer gate 306b, the third second transfer gate 306c, and the fourth second transfer gate 306d are clocked low to store the remaining charges (c, d) in the rest of the binning registers 204b, respectively.

At the sixth stage illustrated in Figure 4F, the binning registers 304a laterally transfer the remaining charges (c, d) stored in the binning registers 304a by a column. The third charge (c) is now located in the first column of the binning registers 304a.

At the seventh stage illustrated in Figure 4G, the first second transfer gate 306a transfers the third charge (c) to the storage register 308a. The first charge (a), the second charge (b), and the third charge (c) are added (a + b + c) in the storage register 308a. The second second transfer gate 306b, the third second transfer gate 306c, and the fourth second transfer gate 306d are clocked low to store the remaining charge (d) in the binning registers 304a.

At the eighth stage illustrated in Figure 4H, the binning registers 304a laterally transfer the remaining charge (d) stored in the binning registers 304a by a column. The fourth charge (d) is now located in the first column of the binning registers 304a.

At the ninth stage illustrated in Figure 4I, the first second transfer gate 306a transfers the fourth charge (d) to the storage register 308a. The first charge (a), the second charge (b), the third charge (c), and the fourth charge (d) are added (a + b + c + d) in the storage register 308a. The second second transfer gate 306b, the third second transfer gate 306c, and the fourth second transfer gate fourth 306d are clocked low. The four times binning operation is now completed.

The stages described in connection with Figures 4A-I repeat with the next row of charges (e, f, g, h) and so on.

The stages illustrated in Figures 4A-I are exemplary of four times binning. For n times binning in general, a row of the first transfer gate transfers a row of charges from the plurality of pixel registers to the plurality of binning registers. The first gate out of every n second transfer gates transfers the charge stored in the first binning register to the storage register below the first second transfer gate while the rest of charges in the binning registers is held. The binning registers then shift the remaining row of charges laterally by a column. The process of transferring to the storage register and laterally shifting repeats n - 1 times total to thus add n columns of charges.

When binning is disabled, only the first phase (310a, 310b, 310c, 310d, and 310e) of the binning registers between adjacent binning register columns is clocked low while a row of signal charges from the plurality of pixel registers is transferred through the plurality of binning registers by a row of the first transfer gates and subsequently to a row of storage registers by the plurality of second transfer gates.

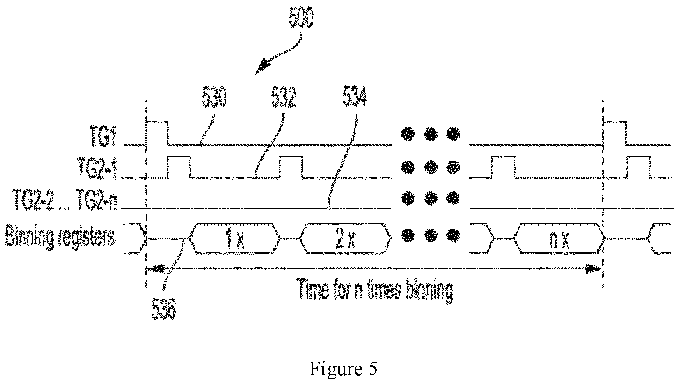

Figure 5 is a timing diagram 500 for n times binning operation of the pixel binning apparatus according to an exemplary embodiment of the disclosure. The pixel binning apparatus comprises a control means configured to generate the timing waveforms of the timing diagram 500 to operate the first transfer gate, the binning registers, and the plurality of second transfer gates. With reference now to Figure 5 together with Figures 2, 3, and 4A-I, a row of the first transfer gate (TG1) has a timing waveform 530. When the first transfer gate (TG1) is clocked high, a row of charges stored in the first row of the plurality of pixel registers is transferred to the plurality of the binning registers. The first transfer gate (TG1) is then clocked low to hold the next row of charges in the first row of the plurality of pixel registers.

With continued reference to Figure 5 together with Figures 2, 3, and 4A-I, the first second transfer gate (TG2-1) has a timing waveform 532. The rest of second transfer gates (TG2-2, TG2-3, ..., TG2-n) has a timing waveform 534. Subsequent to the row of charges transferring into the plurality of binning registers, the first second transfer gate (TG2-1) is clocked high to transfer the first charge from the first binning register to the storage register below while the remaining second transfer gates (TG2-2, TG2-3, ..., TG2-n) are clocked low.

After the charge in the binning column above the first second transfer gate (TG2-1) is transferred to the storage register, the first second transfer gate (TG2-1) is clocked low. The binning registers transfer the remaining charges laterally by a column. The transferring of charge to the storage register and the lateral transfers of the remaining charges are repeated n times. Subsequently, the entire process repeats with the next plurality of charges.

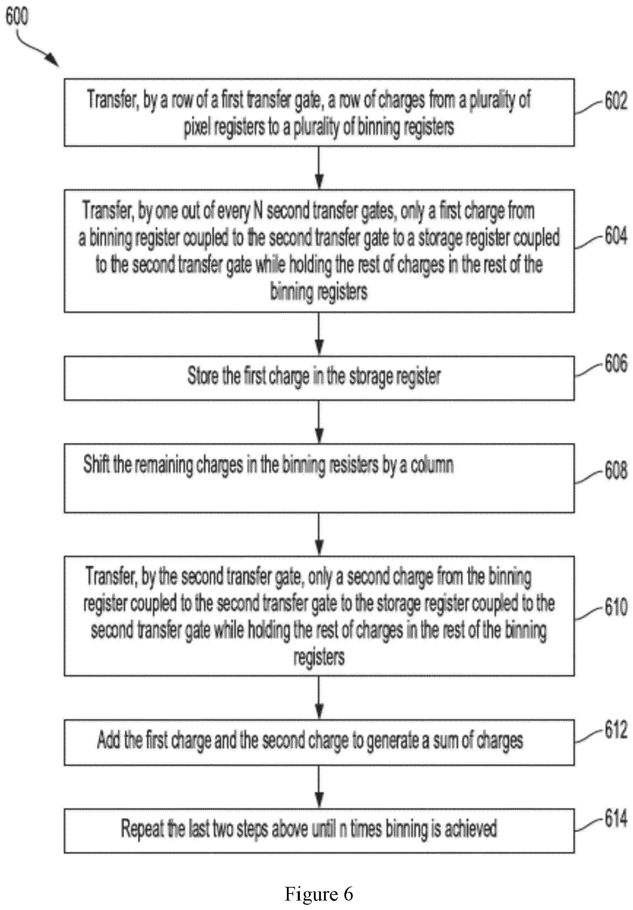

Figure 6 is a logic flow diagram 600 of a method of operating the pixel binning apparatus according to an exemplary embodiment of the disclosure. With reference now to Figure 6 together with Figures 2-5, according to the method 600 of operating the pixel binning apparatus, a row of a first transfer gate transfers 602 a row of charges from a plurality of pixel registers to a plurality of binning registers. Subsequently, according to the method 600 of pixel binning, the first gate of the plurality of second transfer gates transfers 604 only a first charge from a binning register coupled to the second transfer gate to a storage register coupled to the second transfer gate while holding the rest of charges in the rest of the binning registers. According to the method 600 of operating the pixel binning apparatus, the first charge is stored 606 in the storage register and the rest of charges in the binning registers is shifted 608 by a column. According to the method 600 of operating the pixel binning apparatus, the second transfer gate transfers 610 only a second charge from the binning register coupled to the second transfer gate to the storage register coupled to the second transfer gate while holding the rest of charges in the rest of the binning registers. The first charge and the second charge are added 612 to generate a sum of charges. According to the method 600 of operating the pixel binning apparatus, the last transfer 610 and add 612 steps are repeated 614 until n times binning is achieved.

In one aspect, according to the method 600 of operating the pixel binning apparatus, a row of the first transfer gate is coupled to a first end of the plurality of pixel registers and another row of the first transfer gate is coupled to a second end of the plurality of pixel registers. The method 600 of operating the pixel binning apparatus is performed using one of the two rows of the first transfer gate in response to a direction of TDI scanning for bidirectional operation.

In the claims, as well as in the specification above, all transitional phrases such as "comprising," "including," "carrying," "having," "containing," "involving," "holding," "composed of," and the like are to be understood to be open-ended, i.e., to mean including but not limited to. The transitional phrases "consisting of" and "consisting essentially of" shall be closed or semi-closed transitional phrases, respectively.

## Claims

1. A charge-domain CMOS Time Delay and Integration (TDI) image sensor, comprising:
a plurality of pixel registers;
a first binning apparatus comprising:
a first transfer gate coupled to a first row of the plurality of pixel registers;
a plurality of binning registers coupled to the first transfer gate, wherein the binning registers are disposed orthogonally to the pixel registers;
a channel stop disposed between two adjacent columns of the plurality of pixel registers does not exist between two adjacent binning registers, wherein the channel stop extends from a first end of the pixel registers to a second end of the pixel registers and through the first transfer gate, wherein the channel stop is disposed between each of the adjacent pixel registers of the plurality of pixel registers, wherein the channel stop is disposed between each gate of the second transfer gates;
a plurality of second transfer gates, n, is disposed adjacent to the plurality of binning registers, wherein the first gate of the plurality of second transfer gates is clocked high and the remaining second transfer gates, n-1, are clocked low, where n is greater than 1;
a row of storage registers coupled to the plurality of second transfer gates; and
a control means configured to: clock the first gate of the plurality of second transfer gates high to transfer a charge, clock the remaining second transfer gates, n-1, low to hold remaining charges, where n is greater than 1, and shift the remaining charges laterally in the binning registers by a column.

2. The charge-domain CMOS TDI image sensor of claim 1 comprising:
a second binning apparatus coupled to the other end of the plurality of pixel registers, wherein the second binning apparatus comprises:
a first transfer gate coupled to a first row of the plurality of pixel registers;
a plurality of binning registers coupled to the first transfer gate, wherein the binning registers are disposed orthogonally to the pixel registers;
a channel stop disposed between two adjacent columns of the plurality of pixel registers does not exist between two adjacent binning registers, wherein the channel stop extends from a first end of the pixel registers to a second end of the pixel registers and through the first transfer gate, wherein the channel stop is disposed between each of the adjacent pixel registers of the plurality of pixel registers, wherein the channel stop is disposed between each gate of the second transfer gates;
a plurality of second transfer gates, n, is disposed adjacent to the plurality of binning registers, wherein the first gate of the plurality of second transfer gates is clocked high and the remaining second transfer gates, n-1, are clocked low, where n is greater than 1; and
a row of storage registers coupled to the plurality of second transfer gates; and
wherein the control means is further configured to: clock the first gate of the plurality of second transfer gates of the second binning apparatus high to transfer a charge, clock the remaining second transfer gates, n-1, of the second binning apparatus low to hold remaining charges, where n is greater than 1, and shift the remaining charges laterally in the binning registers of the second binning apparatus by a column.

3. The charge-domain CMOS TDI image sensor of claim 2, wherein the first binning apparatus and the second binning apparatus are located in light shielded regions of the charge-domain CMOS TDI image sensor.

4. A method of pixel binning using the charge-domain CMOS TDI image sensor according to claim 1, comprising:
clocking the first transfer gate low to store charges in the pixel registers;
clocking the first transfer gate high;
in response to clocking the first transfer gate high, transferring, by a row of a first transfer gate, a row of charges from a plurality of pixel registers to a plurality of binning registers, wherein binning is enabled for n number of pixel columns;
clocking the first transfer gate low in response to transferring the row of charges from the plurality of pixel registers to the plurality of binning registers;
in response to transferring the row of charges to the plurality of binning registers, clocking the first gate of a plurality of second transfer gates high, wherein n is greater than one;
clocking the remaining n-1 second transfer gates low;
transferring, by first gate of the plurality of second transfer gates, only a first charge from a binning register coupled to the second transfer gate to a storage register coupled to the second transfer gate while holding the rest of charges in the rest of the binning registers;
storing the first charge in the storage register;
clocking the first gate of the plurality of the second transfer gates low;
shifting the remaining charges in the binning registers by a column;
clocking the first gate of the plurality of the second transfer gates high;
transferring, by the second transfer gate, only a second charge from the binning register coupled to the second transfer gate to the storage register coupled to the second transfer gate while holding the rest of charges in the rest of the binning registers;
adding the first charge and the second charge to generate a sum of charges; and
repeating the transferring and the adding until n times binning is achieved.

5. The method of claim 4, further comprising disabling binning by:
transferring, by a row of the first transfer gate, a row of signal charges from the plurality of pixel registers to the plurality of binning registers; and
transferring, by the plurality of second transfer gates, a row of the charges from the plurality of binning registers to a row of storage registers.

6. The method of claim 5, wherein:
a row of the first transfer gate is coupled to a first end of the plurality of pixel registers;
another row of the first transfer gate is coupled to a second end of the plurality of pixel registers; and
the method is performed using one of the row of the first transfer gate or the another row of the first transfer gate in response to a direction of TDI scanning for bidirectional operation.

## Patentansprüche

1. Ladungsdomänen-CMOS-Zeitverzögerung und Integration (TDI)-Bildsensor, umfassend:
eine Vielzahl von Pixel-Registern;
eine erste Binning-Vorrichtung umfassend:
ein erstes Transfergatter, das mit einer ersten Zeile von der Vielzahl von Pixel-Registern gekoppelt ist;
eine Vielzahl von Binning-Registern, die mit dem ersten Transfergatter gekoppelt sind, worin die Binning-Register orthogonal zu den Pixel-Registern angeordnet sind;
einen Kanalstopper, der zwischen zwei angrenzenden Spalten von der Vielzahl von Pixel-Registern angeordnet ist, zwischen zwei angrenzenden Binning-Registern nicht existiert, worin der Kanalstopper sich von einem ersten Ende der Pixel-Register zu einem zweiten Ende der Pixel-Register und durch das erste Transfergatter erstreckt, worin der Kanalstopper zwischen jedem von den angrenzenden Pixel-Registern von der Vielzahl von Pixel-Registern angeordnet ist, worin der Kanalstopper zwischen jedem Gatter der zweiten Transfergatter angeordnet ist;
eine Vielzahl von zweiten Transfergattern, n, an die Vielzahl von Binning-Registern angrenzend angeordnet ist, worin das erste Gatter von der Vielzahl von zweiten Transfergattern hoch getaktet ist und die verbleibenden zweiten Transfergatter, n-1, niedrig getaktet sind, wo n größer als 1 ist;
eine Zeile von Speicherregistern, die mit der Vielzahl von zweiten Transfergattern gekoppelt ist; und
ein Steuerungsmittel, das dazu konfiguriert ist: das erste Gatter von der Vielzahl von zweiten Transfergattern hoch zu takten, um eine Ladung zu übertragen, die verbleibenden zweiten Transfergatter, n-1, niedrig zu takten, um die verbleibenden Ladungen zu halten, wo n größer als 1 ist, und die verbleibenden Ladungen seitlich in den Binning-Registern um eine Spalte zu verlagern.

2. Ladungsdomänen-CMOS-TDI-Bildsensor nach Anspruch 1 umfassend:
eine zweite Binning-Vorrichtung, die mit dem anderen Ende von der Vielzahl von Pixel-Registern gekoppelt ist, worin die zweite Binning-Vorrichtung umfasst:
ein erstes Transfergatter, das mit einer ersten Zeile von der Vielzahl von Pixel-Registern gekoppelt ist;
eine Vielzahl von Binning-Registern, die mit dem ersten Transfergatter gekoppelt sind, worin die Binning-Register orthogonal zu den Pixel-Registern angeordnet sind;
einen Kanalstopper, der zwischen zwei angrenzenden Spalten von der Vielzahl von Pixel-Registern angeordnet ist, zwischen zwei angrenzenden Binning-Registern nicht existiert, worin der Kanalstopper sich von einem ersten Ende der Pixel-Register zu einem zweiten Ende der Pixel-Register und durch das erste Transfergatter erstreckt, worin der Kanalstopper zwischen jedem von den angrenzenden Pixel-Registern von der Vielzahl von Pixel-Registern angeordnet ist, worin der Kanalstopper zwischen jedem Gatter der zweiten Transfergatter angeordnet ist;
eine Vielzahl von zweiten Transfergattern, n, an die Vielzahl von Binning-Registern angrenzend angeordnet ist, worin das erste Gatter von der Vielzahl von zweiten Transfergattern hoch getaktet ist und die verbleibenden zweiten Transfergatter, n-1, niedrig getaktet sind, wo n größer als 1 ist; und
eine Zeile von Speicherregistern, die mit der Vielzahl von zweiten Transfergattern gekoppelt ist; und
worin das Steuerungsmittel ferner dazu konfiguriert ist: das erste Gatter von der Vielzahl von zweiten Transfergattern der zweiten Binning-Vorrichtung hoch zu takten, um eine Ladung zu übertragen, die verbleibenden zweiten Transfergatter, n-1, der zweiten Binning-Vorrichtung niedrig zu takten, um die verbleibenden Ladungen zu halten, wo n größer als 1 ist, und die verbleibenden Ladungen seitlich in den Binning-Registern der zweiten Binning-Vorrichtung um eine Spalte zu verlagern.

3. Ladungsdomänen-CMOS-TDI-Bildsensor nach Anspruch 2, worin die erste Binning-Vorrichtung und die zweite Binning-Vorrichtung in vom Licht abgeschirmten Bereichen des Ladungsdomänen-CMOS-TDI-Bildsensors gelegen sind.

4. Verfahren zum Pixel-Binning unter Verwendung des Ladungsdomänen-CMOS-TDI-Bildsensors nach Anspruch 1, umfassend:
niedriges Takten des ersten Transfergatters, um Ladungen in den Pixel-Registern zu speichern;
hohes Takten des ersten Transfergatters;
als Antwort darauf, dass das erste Transfergatter hoch getaktet wird, Übertragen, durch eine Zeile eines ersten Transfergatters, einer Zeile von Ladungen von einer Vielzahl von Pixel-Registern zu einer Vielzahl von Binning-Registern, worin Binning für n Anzahl von Pixelspalten ermöglicht wird;
niedriges Takten des ersten Transfergatters als Antwort auf das Übertragen der Zeile von Ladungen von der Vielzahl von Pixel-Registern zu der Vielzahl von Binning-Registern;
als Antwort auf das Übertragen der Zeile von Ladungen zu der Vielzahl von Binning-Registern, hohes Takten des ersten Gatters von einer Vielzahl von zweiten Transfergattern, worin n größer als eins ist;
niedriges Takten der verbleibenden n-1 zweiten Transfergattern;
Übertragen, durch das erste Gatter von der Vielzahl von zweiten Transfergattern, nur einer ersten Ladung von einem Binning-Register, das mit dem zweiten Transfergatter gekoppelt ist, zu einem Speicherregister, das mit dem zweiten Transfergatter gekoppelt ist, während der Rest der Ladungen im Rest der Binning-Register gehalten wird;
Speichern der ersten Ladung im Speicherregister;
niedriges Takten des ersten Gatters von der Vielzahl von zweiten Transfergattern;
Verlagern der verbleibenden Ladungen in den Binning-Registern um eine Spalte;
hohes Takten des ersten Gatters von der Vielzahl von den zweiten Transfergattern;
Übertragen, durch das zweite Transfergatter, nur einer zweiten Ladung von dem Binning-Register, das mit dem zweiten Transfergatter gekoppelt ist, zu dem Speicherregister, das mit dem zweiten Transfergatter gekoppelt ist, während der Rest der Ladungen im Rest der Binning-Register gehalten wird;
Hinzufügen der ersten Ladung und der zweiten Ladung, um eine Summe von Ladungen zu erzeugen; und
Wiederholen des Übertragens und des Hinzufügens, bis n-maliges Binning erzielt wird.

5. Verfahren nach Anspruch 4, ferner umfassend das Ausschalten des Binning durch:
Übertragen, durch eine Zeile des ersten Transfergatters, einer Zeile von Signalladungen von der Vielzahl von Pixelregistern zu der Vielzahl von Binning-Registern; und
Übertragen, durch die Vielzahl von zweiten Transfergattern, einer Zeile von den Ladungen von der Vielzahl von Binning-Registern zu einer Zeile von Speicherregistern.

6. Verfahren nach Anspruch 5, worin:
eine Zeile des ersten Transfergatters mit einem ersten Ende von der Vielzahl von Pixel-Registern gekoppelt ist;
eine andere Zeile des ersten Transfergatters mit einem zweiten Ende von der Vielzahl von Pixel-Registern gekoppelt ist; und
das Verfahren durch Verwendung einer von der Zeile des ersten Transfergatters oder einer anderen Zeile des ersten Transfergatters als Antwort auf eine Richtung von TDI-Scannen für bidirektionalen Betrieb durchgeführt wird.

## Revendications

1. Capteur d'images CMOS à retard et intégration temporels (TDI) dans le domaine des charges, comprenant :
une pluralité de registres de pixels ;
un premier appareil de regroupement comprenant :
une première grille de transfert couplée à une première rangée de la pluralité de registres de pixels ;
une pluralité de registres de regroupement couplés à la première grille de transfert, dans lequel les registres de regroupement sont disposés orthogonalement aux registres de pixels ;
un arrêt de canal disposé entre deux colonnes adjacentes de la pluralité de registres de pixels n'existe pas entre deux registres de regroupement adjacents, dans lequel l'arrêt de canal s'étend d'une première extrémité des registres de pixels à une seconde extrémité des registres de pixels et à travers la première grille de transfert, dans lequel l'arrêt de canal est disposé entre chacun des registres de pixels adjacents de la pluralité de registres de pixels, dans lequel l'arrêt de canal est disposé entre chaque grille des secondes grilles de transfert ;
une pluralité de secondes grilles de transfert, n, est disposée de manière adjacente à la pluralité de registres de regroupement, dans lequel la première grille de la pluralité de secondes grilles de transfert est cadencée à l'état haut et les secondes grilles de transfert restantes, n-1, sont cadencées à l'état bas, où n est supérieur à 1 ;
une rangée de registres de stockage couplée à la pluralité de secondes grilles de transfert ; et
un moyen de commande configuré pour : cadencer la première grille de la pluralité de secondes grilles de transfert à l'état haut pour transférer une charge, cadencer les secondes grilles de transfert restantes, n-1, à l'état bas pour retenir des charges restantes, où n est supérieur à 1, et décaler latéralement les charges restantes dans les registres de regroupement d'une colonne.

2. Capteur d'images CMOS TDI dans le domaine des charges selon la revendication 1, comprenant :
un second appareil de regroupement couplé à l'autre extrémité de la pluralité de registres de pixels, dans lequel le second appareil de regroupement comprend :
une première grille de transfert couplée à une première rangée de la pluralité de registres de pixels ;
une pluralité de registres de regroupement couplés à la première grille de transfert, dans lequel les registres de regroupement sont disposés orthogonalement aux registres de pixels ;
un arrêt de canal disposé entre deux colonnes adjacentes de la pluralité de registres de pixels n'existe pas entre deux registres de regroupement adjacents, dans lequel l'arrêt de canal s'étend d'une première extrémité des registres de pixels à une seconde extrémité des registres de pixels et à travers la première grille de transfert, dans lequel l'arrêt de canal est disposé entre chacun des registres de pixels adjacents de la pluralité de registres de pixels, dans lequel l'arrêt de canal est disposé entre chaque grille des secondes grilles de transfert ;
une pluralité de secondes grilles de transfert, n, est disposée de manière adjacente à la pluralité de registres de regroupement, dans lequel la première grille de la pluralité de secondes grilles de transfert est cadencée à l'état haut et les secondes grilles de transfert restantes, n-1, sont cadencées à l'état bas, où n est supérieur à 1 ; et
une rangée de registres de stockage couplée à la pluralité de secondes grilles de transfert ; et
dans lequel le moyen de commande est en outre configuré pour : cadencer la première grille de la pluralité de secondes grilles de transfert du second appareil de regroupement à l'état haut pour transférer une charge, cadencer les secondes grilles de transfert restantes, n-1, du second appareil de regroupement à l'état bas pour retenir des charges restantes, où n est supérieur à 1, et décaler latéralement les charges restantes dans les registres de regroupement du second appareil de regroupement d'une colonne.

3. Capteur d'images CMOS TDI dans le domaine des charges selon la revendication 2, dans lequel le premier appareil de regroupement et le second appareil de regroupement sont situés dans des régions protégées de la lumière du capteur d'images CMOS TDI dans le domaine des charges.

4. Procédé de regroupement de pixels utilisant le capteur d'images CMOS TDI dans le domaine des charges selon la revendication 1, comprenant :
le cadencement de la première grille de transfert à l'état bas pour stocker des charges dans les registres de pixels ;
le cadencement de la première grille de transfert à l'état haut ;
en réponse au cadencement de la première grille de transfert à l'état haut, le transfert, par une rangée d'une première grille de transfert, d'une rangée de charges depuis une pluralité de registres de pixels vers une pluralité de registres de regroupement, dans lequel le regroupement est activé pour un nombre n de colonnes de pixels ;
le cadencement de la première grille de transfert à l'état bas en réponse au transfert de la rangée de charges depuis la pluralité de registres de pixels vers la pluralité de registres de regroupement ;
en réponse au transfert de la rangée de charges vers la pluralité de registres de regroupement, le cadencement de la première grille d'une pluralité de secondes grilles de transfert à l'état haut, dans lequel n est supérieur à un ;
le cadencement des n-1 secondes grilles de transfert restantes à l'état bas ;
le transfert, par la première grille de la pluralité de secondes grilles de transfert, uniquement d'une première charge depuis un registre de regroupement couplé à la seconde grille de transfert vers un registre de stockage couplé à la seconde grille de transfert tout en retenant le reste des charges dans le reste des registres de regroupement ;
le stockage de la première charge dans le registre de stockage ;
le cadencement de la première grille de la pluralité des secondes grilles de transfert à l'état bas ;
le décalage des charges restantes dans les registres de regroupement d'une colonne ;
le cadencement de la première grille de la pluralité des secondes grilles de transfert à l'état haut ;
le transfert, par la seconde grille de transfert, uniquement d'une seconde charge depuis le registre de regroupement couplé à la seconde grille de transfert vers le registre de stockage couplé à la seconde grille de transfert tout en retenant le reste des charges dans le reste des registres de regroupement ;
l'addition de la première charge et de la seconde charge pour générer une somme de charges ; et
la répétition du transfert et de l'addition jusqu'à ce qu'un regroupement n fois soit obtenu.

5. Procédé selon la revendication 4, comprenant en outre la désactivation du regroupement par :
le transfert, par une rangée de la première grille de transfert, d'une rangée de charges de signal depuis la pluralité de registres de pixels vers la pluralité de registres de regroupement ; et
le transfert, par la pluralité de secondes grilles de transfert, d'une rangée des charges depuis la pluralité de registres de regroupement vers une rangée de registres de stockage.

6. Procédé selon la revendication 5, dans lequel :
une rangée de la première grille de transfert est couplée à une première extrémité de la pluralité de registres de pixels ;
une autre rangée de la première grille de transfert est couplée à une seconde extrémité de la pluralité de registres de pixels ; et
le procédé est mis en œuvre en utilisant l'une parmi la rangée de la première grille de transfert ou l'autre rangée de la première grille de transfert en réponse à une direction de balayage TDI pour un fonctionnement bidirectionnel.
